# EUROPEAN PATENT APPLICATION

(11) **EP 2 090 795 A2**
(43) Date of publication of application: **19.08.2009**
(21) Application number: 09001908.4
(22) Date of filing: 11.02.2009
(51) Int. Cl.: F16C 33/66

(54) **Tapered roller bearing apparatus**

(30) Priority: 15.02.2008 JP 2008034347
(71) Applicant: JTEKT Corporation, Osaka-shi Osaka 542-8502 (JP)
(72) Inventor: Masuda, Naoki, Osaka-shi Osaka 542-8502 (JP); Koda, Kanichi, Osaka-shi Osaka 542-8502 (JP); Kawaguchi, Toshihiro, Osaka-shi Osaka 542-8502 (JP)
(74) Representative: Schmitz, Hans-Werner

(57) **Abstract**

A tapered roller bearing for a pinion shaft (2) according to the invention includes an inner ring (11) that has an outer circumferential surface on which an inner ring raceway surface is formed and that is integrally fixed to a one-end-side of the pinion shaft, an outer ring (12) that has an inner circumferential surface on which an outer ring raceway surface is formed and that is fixed to a housing, and a plurality of tapered rollers (13) rollably interposed between both of the raceway surfaces. An annular oil reservoir groove (15) for storing lubricating oil is formed in a distal end portion at the one-end-side in an axial direction of the inner circumferential surface by being recessed thereinto adjacent to the outer ring raceway surface.

## Description

### BACKGROUND OF THE INVENTION

The present invention relates to a tapered roller bearing apparatus for a pinion shaft, which is used for supporting a pinion shaft of a differential device of a vehicle or the like.

A differential device used in rear wheel drive of a vehicle such as an automobile has a pinion shaft rotationally driven by being connected to a propeller shaft for transmitting an output of an engine, a ring gear that meshes with a pinion gear provided at a one-end-side distal end of this pinion shaft, and a differential mechanism fixed to this ring gear integrally rotatably therewith to rotate a pair of rear wheels. The differential device transmits an output of the engine, which is to be transmitted via the propeller shaft connected to the other-end side of the pinion shaft, to the pair of rear wheels.
A pair of tapered roller bearings are placed at both end portions of the pinion shaft, respectively. The pinion shaft is rotatably supported in the housing of the differential device by this pair of tapered roller bearings.
Further, lubricating oil is stored in the housing of the differential device. The differential device is constructed such that the stored lubricating oil is splashed by the rotation of the ring gear to thereby circulate the lubricating oil in the housing. The differential mechanism, the ring gear, the pair of tapered roller bearings, which are arranged in the housing, are lubricated by being immersed in the stored lubricating oil or by being supplied with the lubricating oil that is circulated by being splashed with the ring gear (see, e.g., JP-A-2003-148459).

In ordinary rear-drive automobiles, according to the layout thereof, driving wheels are placed lower than an engine. Thus, a propeller shaft which connects the engine to the differential device placed at the side of the driving wheels is disposed by being inclined downwardly from the engine to the differential device. Accordingly, the differential device is mounted on an automobile body in a state in which a pinion shaft is inclined along an axis line of the propeller shaft. That is, the pinion shaft is placed by being inclined downwardly to a one-end side (rear side) having a pinion gear from the other-end side (front side) to which the propeller shaft is connected. Consequently, between a pair of tapered roller bearings that support the pinion shaft, the tapered roller bearing at the other-end side is positioned upper than the tapered roller bearing at the one-end side.

Thus, even in a case where lubricating oil is stored in the housing so that a tapered roller bearing positioned at the other-end side is immersed in the lubricating oil, e.g., in a state in which an automobile quipped with the differential device is placed on a flat road, when the automobile runs a slope road, the pinion shaft is more inclined with respect to the oil level of the lubricating oil, which is maintained to be horizontal. The automobile is liable to be put into a state in which the tapered roller bearing positioned at the other-end side so as to be upper than the other one is not immersed in the lubricating oil. Further, in a case where the automobile performs low-speed running, the lubricating oil cannot be expected to be supplied thereto by being splashed by the ring gear. In such a case, there are fears that the tapered roller bearing at the other-end side may be inappropriately lubricated, and that seizure thereof may occur.

### SUMMARY OF THE INVENTION

The invention is accomplished in view of such circumstances. Accordingly, an object of the invention is to provide a tapered roller bearing apparatus for a pinion shaft of a differential device, which can maintain an appropriate lubrication state and suppress occurrence of seizure of a tapered roller bearing apparatus.

To achieve the foregoing obj ect, according to the invention, there is provided a tapered roller bearing apparatus comprising:
a housing which stores lubricating oil and forms a differential device;
a pinion shaft which is accommodated in the housing and includes a pinion gear provided at a one end side of the pinion shaft;
an inner ring which includes an outer circumferential surface on which an inner ring raceway surface is formed and which is integrally fixed to the other end side of the pinion shaft;
an outer ring that includes an inner circumferential surface on which an outer ring raceway surface is formed and which is fixed to the housing;
a plurality of tapered rollers rollably interposed between the inner and outer rings; and
an annular oil reservoir groove which stores lubricating oil and which is formed in a distal end portion at the other-end side in an axial direction of the inner circumferential surface, the groove being formed by recessing a part of the inner circumferential surface adjacent to the outer ring raceway surface.

According to the tapered roller bearing apparatus constructed as described above, the annular oil reservoir groove for storing lubricating oil is formed in the distal end portion at the other-end side in an axial direction of the inner circumferential surface by being recessed thereinto adjacent to the outer ring raceway surface. Thus, even when the oil level of the lubricating stored in the housing is inclined, an appropriate lubricating state can be maintained. That is, according to the invention, e.g., even in a case where the differential device is tilted thereby to incline the oil level of the lubricating oil stored in the housing and to put the tapered roller bearing, which supports the other-end side of the pinion shaft, into a state in which this tapered roller bearing is not immersed in the lubricating oil stored in the housing, so that this tapered roller bearing is not lubricated with the lubricating oil stored in the housing, the lubricating oil stored in the oil reservoir groove can be supplied to the outer ring raceway surface and to the inner ring raceway surface via this outer ring raceway surface.
Consequently, even when the oil level of the lubricating oil stored in the housing is inclined, an appropriate lubricating state can be maintained. In addition, seizure can be suppressed from occurring in the tapered roller bearing.

In the tapered roller bearing apparatus, preferably, an annular wall portion protruding radially inwardly from the inner circumferential surface of the outer ring is formed on an end edge at the other-end side in the axial direction of the inner circumferential surface.
In this case, the annular wall portion can prevent all the lubricating oil in the bearing from flowing out of the hosing when a state, in which the tapered roller bearing is immersed in the lubricating oil, is changed to a state in which the tapered roller bearing is exposed from the oil level. Consequently, the lubricating oil stored in the oil reservoir groove can effectively be assured.

Further, preferably, an inner circumferential diameter of a distal end part of the annular wall portion is set to be larger than a circumscribed circle diameter of the plurality of tapered rollers. In this case, the inner ring in a state,
in which the plurality of rollers are arranged on the inner ring race way surface thereof, is not prevented from passing through the inner circumferential side of the annular wall portion. Accordingly, when the plurality of rollers and the inner ring are arranged on the inner circumferential side of the outer ring in order to assemble the tapered roller bearing apparatus, the tapered roller bearing apparatus can be assembled in a state in which the annular wall portion is provided on the outer ring. Thus, the annular wall portion can be provided in a state in which the outer ring provided with the annular wall portion is a single body. Consequently, the annular wall portion can more easily be provided in the tapered roller bearing.

The tapered roller bearing apparatus according to the invention can maintain an appropriate lubrication state thereof and can suppress occurrence of seizure thereof.

### BRIEF DESCRIPTION OF THE DRAWINGS

FIG. 1 is a cross-sectional view illustrating a differential device to which a tapered roller bearing apparatus for a pinion shaft according to the invention is applied.
FIG. 2 is a cross-sectional view illustrating a part of a second tapered roller bearing apparatus.
FIG. 3 is a cross-sectional view illustrating a part of a tapered roller bearing apparatus for a pinion shaft according to another embodiment of the invention.

### DETAILED DESCRIPTION OF PREFERRED EMBODIMENTS

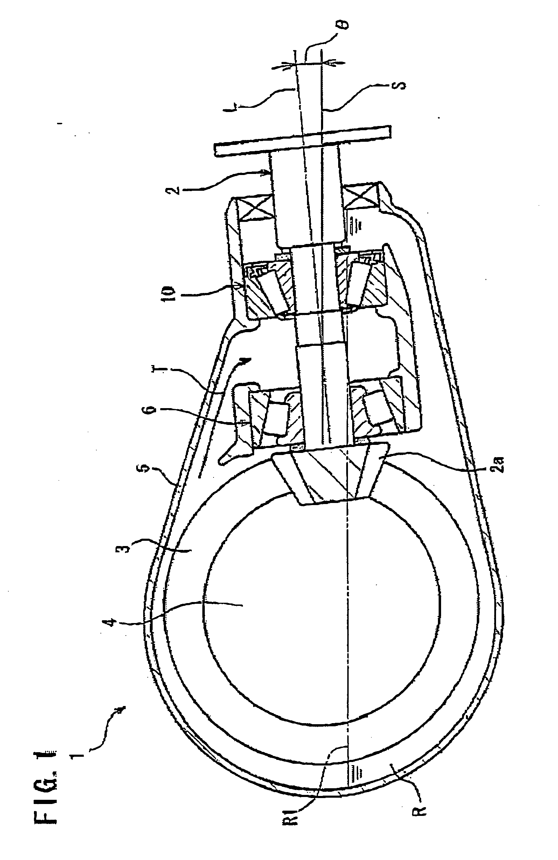

Next, a preferred embodiment of the invention is described with reference to the accompanying drawings. Incidentally, in the following description, the invention is described by exemplifying a case where the invention is applied to a differential device for rear-drive of an automobile. FIG. 1 is a cross-sectional view illustrating a differential device to which the invention is applied.
In FIG. 1, a differential device 1 is used for transmitting a turning force output from an engine (not shown) of an automobile to rear wheels (not shown) serving as driving wheels arranged at both sides (in a direction perpendicular to paper on which FIG. 1 is drawn) of the differential device 1. The differential device 1 includes a pinion shaft 2 connected to a propeller shaft (not shown) for transmitting an output of the engine integrally rotatably therewith, a ring gear 3 meshing with a pinion gear 2a provided at a one-end-side distal end of the pinion shaft 2, a differential mechanism 4 fixed to the ring gear 3 integrally rotatably therewith so as to rotate the rear wheels (not shown), and a housing 5 accommodating these components 2, 3, and 4.

Further, the differential device 1 further includes a first tapered roller bearing 6 for the pinion shaft (hereunder referred to also as the tapered roller bearing 6), which supports the one-end side (i.e., the side of the ring gear 3) of the pinion shaft 2, and a second tapered roller bearing 10 for the pinion shaft (hereunder referred to also as a second tapered roller bearing 10) according to an embodiment of the invention, which supports the other-end side (i.e., a side opposite to the side of the ring gear 3) of the pinion shaft 2.
The pinion shaft 2 is supported by both the tapered roller bearings. 6 and 10 rotatably with respect to the housing 5 in a state in which the other-end-side end portion thereof protrudes out of the housing 5. The propeller shaft is connected to the other-end-side end portion of the pinion shaft 2. The pinion shaft 2 is rotationally driven by the turning force of the engine and transmits the turning force to the ring gear 3 that meshes with the pinion gear 2a.

The differential device 1 is mounted on an automobile body such that an axis line L of the pinion shaft 2 is inclined so as to form an angle θ with a reference line S indicating a horizontal direction of the automobile body. As described above, in ordinary rear-drive automobiles, according to the layout thereof, the rear wheels are placed lower than the engine. Thus, the propeller shaft for connecting the engine to the differential device 1 placed at the side of the driving wheels is disposed so as to be inclined downwardly from the engine to the differential device 1. Consequently, the differential device 1 is mounted on the automobile body in a state in which the axis line L of the pinion shaft 2 rotationally driven by the propeller shaft is tilted along the inclination of the propeller shaft. Accordingly, the second tapered roller bearing 10 is placed slightly upper than the first tapered roller bearing 6 when an automobile is in a state in which the automobile body is in a horizontal state.

Lubricating oil R for lubricating the differential mechanism 4, the ring gear 3, both the tapered roller bearings 6 and 10, and so on is stored in the housing 5. The oil quantity of the lubricating oil R is set so as to position the oil level R1 thereof at a height sufficient to the extent that about (1/3) of the ring gear 3 is immersed in the lubricating oil R1.
Further, as described above, the differential device 1 is mounted on the automobile body such that the axis line L of the pinion shaft 2 is inclined so as to form the angle θ with the reference line S indicating a horizontal direction of the automobile body. Thus, when the automobile body is in a horizontal state, a line indicating the oil level R1 is parallel to the reference line S, as illustrated in FIG. 1.
Furthermore, the lubricating oil R is splashed in the direction of arrow T by the rotation of the ring gear 3. Then, the lubricating oil R flows into a lower portion of the housing 5 again. Thus, the differentia gear 1 is constructed so that the lubricating oil R circulates in the housing 5.
Each component accommodated in the housing 5 is lubricated by being immersed in the stored lubricating oil R and by the circulating supply of the lubricating oil R, which is caused by being splashed by the ring gear 3.

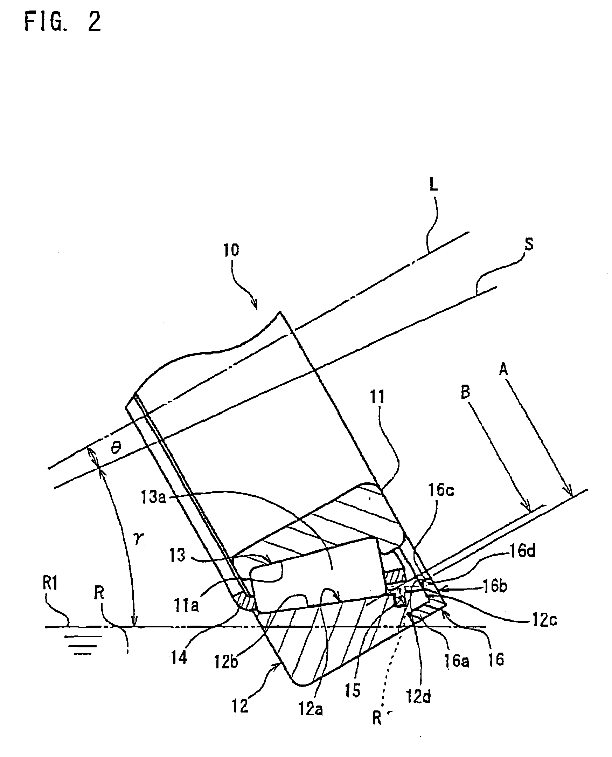

FIG. 2 is a cross-sectional view illustrating a part of the second tapered roller bearing 10. Incidentally, FIG. 2 illustrates a state in which the automobile is placed on an upslope road, so that the entire automobile body including the differential device 1 is tilted in an anteroposterior direction by an angle γ of inclination of the upslope road.
The second tapered roller bearing 10 for supporting the other-end side of the pinion shaft 2 includes an inner ring 11 fixed the other-end side of the pinion shaft 2 integrally rotatably therewith, an outer ring 12 fixed to the housing 5, a plurality of tapered rollers 13 rollably interposed between the inner ring 11 and the outer ring 12, and a retainer 14 for holding the plurality of tapered rollers 13 at uniform intervals along a circumferential direction of each of the inner ring 11 and the outer ring 12.

The inner ring 11 is a cylindrical member formed using, e. g., bearing steel. An inner ring raceway surface 11a, which the tapered rollers 13 are contacted with and rolls on, is formed on an outer circumferential surface of the inner ring 11.
The outer ring 12 is a cylindrical member formed using, e.g., bearing steel, and is arranged at the outer circumferential side of the inner ring 11 concentrically therewith. An outer ring raceway surface 12b, which the tapered rollers 13 are contacted with and rolls on, is formed on an inner circumferential surface 12a of the outer ring 12.
The plurality of tapered rollers 13 are made of, e.g., bearing steel. An outer circumferential surface of each of the plurality of tapered rollers 13 serves as a rolling surface 13a that is contacted with and rolls on both the raceway surfaces 11a and 12b and is arranged in an annular space between the inner ring 11 and the outer ring 12. The tapered rollers 13 is arranged between both the raceway surfaces 11a and 12b so as to perform freely. The inner ring 11 and the outer ring 12 freely perform relative rotation.

An annular oil reservoir groove 15 for storing the lubricating oil R is formed in the other-end-side end portion in the axial direction of the inner circumferential surface 12a of the outer ring 12 by being recessed thereinto adjacent to the outer ring raceway surface 12b. This oil reservoir grove 15 is cross-sectionally rectangular-shaped so as to be dented radially outwardly along a circumferential direction of the outer ring 12. This oil reservoir grove 15 is formed over the entire circumference of the inner circumferential surface 12a.

Further, a cross-sectionally L-shaped annular member 16 is fixed to an end portion 12c at the other-end side in the axial direction of the outer ring 12. The cross-sectionally L-shaped annular member 16 is formed of an elastic material such as rubber and includes a cylindrical portion 16a fixed to cover the outer circumferential side of the outer ring 12, and an annular portion 16b radially inwardly extending from an end portion of the cylindrical portion 16a. Thus, the annular member 16 is fixed to the end portion 12c of the outer ring 12 so as to cover the end portion 12c. The annular member 16 is adhesion-fixed to the outer ring 12 by, e.g., vulcanization-forming.
The annular portion 16b has an end part 16c that protrudes radially inwardly from the inner circumferential surface 12a of the outer ring 12. A protruding portion 16d of the annular portion 16b, which protrudes radially inwardly from the inner circumferential surface 12a, constitutes an annular wall portion provided on an end edge 12d at the other-end side in the axial direction of the inner circumferential surface 12a of the outer ring 12 so as to protrude radially inwardly from the inner circumferential surface 12a.

Further, the annular potion 16b is formed such that an inner circumferential diameter A of the protruding portion 16d is larger than a circumscribed circle diameter B (corresponding to at a roller large end face position) corresponding to large end faces of the plurality of tapered rollers 13 arranged in the circumferential direction. In this case, the inner ring 11 in a state, in which the plurality of tapered rollers 13 are arranged on the inner ring raceway surface 11a, is not prevented from passing through the inner circumferential side of the protruding portion 16d. Accordingly, when the plurality of tapered rollers 13 and the inner ring 11 are arranged on the inner circumferential side of the outer ring 12 so as to assemble the second tapered roller bearing 10, the second tapered roller bearing 10 can be assembled in a state in which the annular member 16 is fixed to the outer ring 12. This facilitates the fixing of the annular member 16 in a state in which the outer ring 12 provided with the annular member 16 is a single body.

Incidentally, as described above, FIG. 2 illustrates a state in which the automobile is placed on an upslope road, so that the entire automobile body including the differential device 1 is tilted in an anteroposterior direction by an angle γ of inclination of the upslope road. More particularly, FIG. 2 illustrates a state in which the reference line S is inclined with respect to the oil level R1 maintained in a horizontal state by an angle γ of inclination of the upslope road, so that the inner circumferential surface 12a of the outer ring 12 is exposed from the oil level R1 of the lubricating oil R stored in the housing 5.

As described above, the differential device 1 is mounted in the automobile in a state in which the differential device 1 is inclined with respect to the automobile body. Thus, when the automobile body is in a horizontal state, the second tapered roller bearing 10 is positioned slightly upper than the first tapered roller bearing 6. Consequently, when the automobile is placed on the slope road so as to further increase the inclination of the differential device 1 with respect to a horizontal direction, the outer ring inner circumferential surface 12a of the second tapered roller bearing 10 is exposed from the lubricating oil R, as illustrated in FIG. 2. Accordingly, the second tapered roller bearing 10 is liable to be brought into a state in which the second tapered roller bearing is not immersed in the lubricating oil.
In such a case, because the second tapered roller bearing 10 is not immersed in the lubricating oil R stored in the housing 5, the second tapered roller bearing 10 cannot be lubricated with the lubricating oil R stored in the housing 5. Further, in a case where the automobile performs low-speed running, the second tapered roller bearing 10 cannot be expected to be lubricated with the lubricating oil R supplied by being circulated by the ring gear 3.

On the other hand, when a state, in which the inner circumferential surface 12a of the second tapered roller bearing 10 is immersed in the lubricating oil R, is changed to a state in which the inner circumferential surface 12a is exposed from the oil level R1, the lubricating oil R flowing out therefrom can be stored in a lower part of the oil reservoir groove 15, as illustrated in FIG. 2. Thus, the lubricating oil R' stored in the oil reservoir groove 15 gradually flows onto the outer ring raceway surface 12a exposed from the oil level R1 to thereby lubricate the outer ring raceway surface 12a.
Further, when the state, in which the inner circumferential surface 12a of the second tapered roller bearing 10 is immersed in the lubricating oil R, is changed to the state in which the inner circumferential surface 12a is exposed from the oil level R1, the protruding portion 16d of the annular member 16 can prevent the lubricating oil R in the bearing from wholly flowing out therefrom. Consequently, the lubricating oil R' stored in the oil reservoir groove 15 can effectively be assured.
Furthermore, because the oil reservoir groove 15 is formed over the entire inner circumferential surface 12a, the oil reservoir groove 15 serves as a tub when the state, in which the inner circumferential surface 12a of the second tapered roller bearing 10 is immersed in the luhricating oil R, is changed to the state in which the inner circumferential surface 12a is exposed from the oil level R1. Thus, the lubricating oil R is led to a lower side portion of the oil reservoir groove 15. Consequently, the lubricating oil R' can efficiently be stored therein.

That is, according to the second tapered roller bearing 10 constructed as described above, the annular oil reservoir groove 15 for storing the lubricating oil R is formed in the end portion at the other-end side in the axial direction of the inner circumferential surface 12a of the outer ring 12 so as to be recessed thereinto adjacent to the outer ring raceway surface 12b. Thus, even when the oil level R1 of the lubricating oil R is inclined in the housing 5, an appropriate lubrication state can be maintained. That is, according to the present embodiment, e.g., even in a case where the differential device 1 is tilted thereby to incline the oil level R1 of the lubricating oil R stored in the housing 5 and to bring the second tapered roller bearing 10 into a state in which the second tapered roller bearing 10 is not immersed in the lubricating oil R stored in the housing 5, so that the second tapered roller bearing 10 is not lubricated with the lubricating oil R stored in the housing 5, the lubricating oil R' stored in the oil reservoir groove 15 can be supplied to the outer ring raceway surface 12b and to the inner ring raceway surface 11a via the outer ring raceway surface 12b and the tapered rollers 13.
Consequently, even when the oil level R1 of the lubricating oil R in the housing 5 is inclined, the appropriate lubrication state can be maintained. Accordingly, seizure can be suppressed from occurring in the second tapered roller bearing 10.

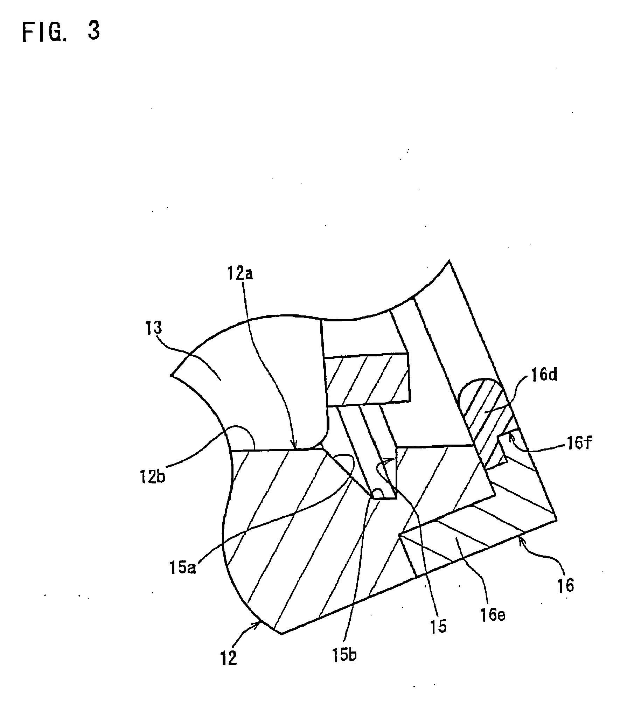

Incidentally, the invention is not limited to the aforementioned embodiment. In the foregoing description of the aforementioned embodiment, the tapered roller bearing, in which the oil reservoir groove 15 is cross-sectionally rectangular-shaped, has been exemplified. However, as illustrated in FIG. 3, a wall surface 15a positioned at the side of the tapered rollers 13, which constitutes the oil reservoir groove 15, can be formed as a tapered surface whose diameter is increased in a direction from the inner circumferential surface 12a towards a bottom portion 15b of the oil reservoir groove 15. In this case, the lubricating oil R' stored in the oil reservoir groove 15 can be made to appropriately flow towards the outer ring raceway surface 12b.
Accordingly, the lubrication of each of the raceway surfaces 11a and 12b can be performed more efficiently.

Further, in the aforementioned embodiment, the annular member 16 is adhesion-fixed to the outer ring 12 by vulcanization-forming. However, an annular member 16 preliminarily formed into a predetermined shape using an elastic material, such as rubber, can be adhesion-fixed to the outer ring 12 by an adhesive or the like.
- Furthermore, in the aforementioned embodiment, the entire annular member 16 is formed using the elastic material. However, e.g., as illustrated in FIG. 3, the annular member 16 can be formed so as to include an annular metal member 16e made, which is fixed to the outer circumferential surface of the outer ring 12, and a distal end member 16f made of an elastic material. The distal end member 16f is fixed to an end of a bent portion 16e1 of the metal member 16e bent radially outwardly and constitutes the annular wall portion protruded from the inner circumferential surface 12a. In this case, the metal member 16e can be fixed to the outer ring 12 by fitting, bonding with an adhesive or the like, or welding with a laser or the like. Thus, according to the annular member 16 constructed by having the metal member 16e, a preferred fixing method can be selected from various methods.

## Claims

1. A tapered roller bearing apparatus comprising:
a housing which stores lubricating oil and forms a differential device;
a pinion shaft which is accommodated in the housing and includes a pinion gear provided at a one end side of the pinion shaft;
an inner ring which includes an outer circumferential surface on which an inner ring raceway surface is formed and which is integrally fixed to the other end side of the pinion shaft;
an outer ring that includes an inner circumferential surface on which an outer ring raceway surface is formed and which is fixed to the housing;
a plurality of tapered rollers rollably interposed between the inner and outer rings; and
an annular oil reservoir groove which stores lubricating oil and which is formed in a distal end portion at the other-end side in an axial direction of the inner circumferential surface, the groove being formed by recessing a part of the inner circumferential surface adjacent to the outer ring raceway surface.

2. The tapered roller bearing apparatus according to claim 1, wherein an annular wall portion protruding radially inwardly from the inner circumferential surface of the outer ring is formed on an end edge at the other-end side in the axial direction of the inner circumferential surface.

3. The tapered roller bearing apparatus according to claim 2, wherein an inner circumferential diameter of a distal end part of the annular wall portion is set to be larger than a circumscribed circle diameter of the plurality of tapered roller bearings.

4. The tapered roller bearing apparatus according to claim 1, wherein the oil reservoir groove is cross-sectionally rectangular-shaped.
